# EUROPÄISCHE PATENTSCHRIFT

(11) **EP 1 096 045 B1**
(45) Veröffentlichungstag und Bekanntmachung des Hinweises auf die Patenterteilung: **07.01.2004**
(21) Anmeldenummer: 00122126.6
(22) Anmeldetag: 12.10.2000
(51) Int. Cl.: D01H 4/12

(54) **Lagerung für einen Offenend-Spinnrotor**
Bearing for a spinning rotor in an open-end spinningdevice
Palier pour un rotor de filage dans un métier à filer à bout libre

(30) Priorität: 26.10.1999 DE 19951640; 24.03.2000 DE 10014861
(43) Veröffentlichungstag der Anmeldung: 02.05.2001
(73) Patentinhaber: Rieter Ingolstadt Spinnereimaschinenbau AG, 85055 Ingolstadt (DE)
(72) Erfinder: Knabel, Manfred, 85055 Ingolstadt (DE); Schuller, Edmund, 85055 Ingolstadt (DE); Bock, Erich, 85139 Wettstetten (DE)
(74) Vertreter: Bergmeier, Werner, Dipl.-Ing.

(56) Entgegenhaltungen:
- DE-A- 3 808 331
- DE-A- 19 705 607
- US-A- 5 275 493
- US-A- 5 845 997

## Beschreibung

Die vorliegende Erfindung betrifft eine Offenend-Spinnvorrichtung mit einem Spinnrotor gemäß dem Oberbegriff des Patentanspruchs 1. Für die Lagerung von Offenend-Spinnrotoren an einer Offenend-Spinnvorrichtung ist es bekannt, den Spinnrotor radial über seinen Schaft durch Stützscheiben zu lagern und in axialer Richtung an einem aerostatischen Axiallager. Eine solche Lagerung ist aus der EP 0435016 A2 bekannt. Das aerostatische Axiallager besitzt dazu eine Lagerplatte, die mit dem Schaftende, das dem Rotor gegenüberliegt, zusammenarbeitet, wobei der Luftaustritt von Druckluft in den Lagerspalt durch die Lagerplatte hindurch erfolgt. Zwischen dem Rotorschaft und der Lagerplatte wird dadurch ein Luftpolster gebildet, das zwischen dem Rotorschaft und der Lagerplatte aufrechterhalten wird, wodurch eine verschleißfreie axiale Lagerung des Rotorschaftes ermöglicht wird. Bei dieser Offenend-Spinnvorrichtung besteht die Lagerplatte aus einem Kohlenstoff-Werkstoff, deren Lagerfläche eben ist, einen geringen Reibwiderstand aufweist und darüber hinaus ein gewisses Maß an Verschleißfähigkeit besitzt. Bei einem Kohlenstoff-Werkstoff handelt es sich im wesentlichen um gebundenen Kohlegraphit, der sich besonders durch seinen niedrigen Reibwert auszeichnet.

Im Normalbetrieb erfolgt zwischen Rotorschaft und Lagerplatte keine Berührung, so daß an sich ein verschleißfreies Axiallager vorliegt. Bei Betrieb von Offenend-Spinnrotoren treten jedoch teilweise derart rauhe Betriebsbedingungen auf, daß eine Berührung zwischen Schaftende und Lagerplatte des aerostatischen Axiallagers vorkommt. Diese rauhen Betriebsbedingungen werden beispielsweise durch Unwucht im Spinnrotor, durch unrund gewordene Stützscheibenbeläge oder verschlissene Antriebsriemen verursacht. Eine Berührung zwischen Schaftende und der Lagerplatte des aerostatischen Axiallagers bedeutet aber nicht zwangsläufig einen Ausfall des Lagers, oder daß das aerostatische Lager beschädigt wird. Der Kohlenstoff-Werkstoff bildet zusammen mit dem Schaftende aus einem metallischen Werkstoff, z.B. Stahl, eine reibungsarme Werkstoffpaarung, die vielfachen Berührungen zwischen Rotorschaft und Lagerplatte standhält, bevor eine Schädigung des Axiallagers eintritt. Die bekannten aerostatischen Axiallager für Offenend-Spinnrotoren haben dennoch den Nachteil, daß insbesondere bei hohen Drehzahlen im Bereich der axialen Lagerung des Spinnrotors Verschleiß auftritt und dadurch die Lebensdauer der Lagerung eingeschränkt wird.

Aus der DE 19705607 A1 ist es bekannt, die mit der Lagerfläche des aerostatischen Axiallagers zusammenarbeitende Fläche des Rotorschaftes mit einem Karbid zu beschichten. Dadurch wird erreicht, daß der Verschleiß der Lagerplatte wesentlich verringert wird. Ausgegangen wird dabei davon, daß ein Kohlenstoff-Werkstoff zusammen mit einem Reibpartner aus Karbid eine verbesserte reibungsarme Werkstoffpaarung ergibt. Die Lebensdauer der pneumatischen Axiallagerung bleibt trotzdem eingeschränkt. Insbesondere bei weiteren Steigerungen der Drehzahl der Offenend-Spinnrotoren und den damit verbundenen ansteigenden ungünstigen Betriebsbedingungen wird die Lebensdauer der bekannten pneumatischen Axiallagerungen eingeschränkt.

Aufgabe der vorliegenden Erfindung ist es, eine Offenend-Spinnvorrichtung gemäß dem Oberbegriff des Anspruchs 1 derart auszubilden, daß die Lebensdauer des Axiallagers wesentlich erhöht wird, sowie einen Spinnrotor für eine erfindungsgemäße Offenend-Spinnvorrichtung.

Die vorliegende Aufgabe wird erfindungsgemäß durch die Ausbildung einer Offenend-Rotorspinnvorrichtung gemäß den Merkmalen des Patentanspruchs 1 sowie durch den Spinnrotor gemäß Anspruch 18 gelöst. Durch die Verwendung des Werkstoffes Polyimid wird eine Werkstoffpaarung am Axiallager erhalten, die einen geringen Reibwert hat, temperaturunempfindlich ist und gegenüber mechanischen Belastungen besonders widerstandsfähig ist. Es wird durch diese vorteilhafte Ausgestaltung ein Axiallager mit einer hohen Festigkeit und hohen Dehnfähigkeit des Lagerwerkstoffs und damit der Lagerfläche oder Lagerplatte erreicht. Neben den erforderlichen günstigen Reibeigenschaften wird günstigerweise auch eine besonders hohe mechanische Belastbarkeit ermöglicht. Dadurch werden die negativen Auswirkungen von mechanischem Kontakt zwischen Lagerfläche und Lagerplatte wesentlich verringert. Dieser Lagerwerkstoff ist darüber hinaus problemlos in der Lage, die mechanischen Belastungen des Lagers nicht nur während des Betriebs, sondern z.B. auch beim Einbau der Lagerplatte zu überstehen, wodurch Fertigungsfehler verringert werden und somit ebenfalls ein Beitrag zur Verbesserung der Lagerung erfolgt.

Darüber hinaus läßt sich dieser Werkstoff gut bearbeiten, wodurch auch das Einhalten von maßlichen Toleranzen bei der Fertigung gewährleistet wird. Dies trägt ebenso dazu bei, daß die Haltbarkeit des Lagers verbessert wird da eine präzise Fertigung gemäß der konstruktiven Vorgaben einfach und sicher möglich ist. Die Vorteile ergeben sich auch bereits dadurch, daß die Lagerplatte oder die Lagerfläche des Spinnrotors eine entsprechend wirkende Beschichtung mit Polyimid besitzen. Dabei wäre die Lagerplatte in Form einer Trägerplatte zur Aufnahme der Beschichtung ausgestaltet oder vorteilhaft die Lagerfläche des Spinnrotors, z. B. das Ende des Rotorschaftes, mit Polyimid beschichtet.

Vorteilhaft kann die Lagerfläche für das aerostatische Axiallager am Schaftende in Form eines Ansatzes aus Polyimid am Schaftende ausgebildet sein, wie es beispielsweise aus Figur 9 der EP 0 435 016 A2 bekannt ist.

In vorteilhafter Weiterbildung des erfinderischen Axiallagers besitzt der Polyimid-Werkstoff einen Zusatz, besonders vorteilhaft aus Graphit. Günstigerweise liegt dabei der Graphitanteil zwischen 10% und 45%, vorteilhaft bei mehr als 40%, jeweils Massenprozent. Dadurch wird ein besonders günstiger, d. h. niedriger Reibwert des Lagerwerkstoffs erreicht, wodurch der Verschleiß bei mechanischer Berührung zwischen Lagerfläche und Lagerplatte weiter verringert wird.

In vorteilhafter Weiterbildung enthält der Polyimid-Werkstoff einen Zusatz von Teflon. Günstigerweise im Bereich von 10% (Massenprozent). Vorteilhaft kann auch der Polyimid-Werkstoff gleichzeitig mit Graphit und Teflon versetzt sein, wobei der Graphitanteil günstigerweise zwischen 10% und 20%, und der Teflonanteil zwischen 5% und 15% beträgt. Darüber hinaus kann vorteilhaft der Lagerwerkstoff aus Polyimid einen Zusatz von Molybdändisulfid (MoS₂), insbesondere zur weiteren Herabsetzung der Reibung, enthalten.

Ebenso wird mit einer weiteren vorteilhaften und erfinderischen Ausgestaltung einer Offenend-Spinnvorrichtung durch die Verwendung eines Lagerwerkstoffs aus einem Kohlenstoff-Werkstoff, der mit Polyimid versetzt ist, erreicht, daß die Offenend-Spinnvorrichtung eine wesentliche Steigerung ihrer Lebensdauer erfährt. Durch das Versetzen mit Polyimid wird die Verschleißfestigkeit wesentlich erhöht. Dabei wird gleichzeitig die mechanische Festigkeit wesentlich gesteigert und die Sprödigkeit herabgesenkt. Dadurch können schlagartige Belastungen, die auf das pneumatische Axiallager einwirken, besser aufgenommen werden. Außerdem bleiben die Vorteile der guten Gleiteigenschaften des Kohlenstoffwerkstoffs als Lagerwerkstoff für. pneumatische Axiallager für Offenend-Spinnrotoren erhalten.

In vorteilhafter Weiterbildung der Erfindung besitzt die Lagerplatte eine oder mehrere Öffnungen oder Bohrungen für den Durchtritt von Luft. Dadurch wird eine einfache und sichere Versorgung des Lagerspaltes mit Luft gewährleistet. Mehrere solcher Bohrungen können dabei vorteilhaft in Form einer Kreislinie angeordnet sein. In besonders günstiger Weiterbildung der Erfindung ist eine Drossel, günstigerweise aus einem Sinterwerkstoff, vorgesehen, die vor dem Eintritt der Luft in den Lagerspalt z. B. in der Luftzuführleitung angeordnet ist. Besonders vorteilhaft ist das dem Spinnrotor gegenüberliegende Ende des Rotorschaftes als Lagerfläche ausgebildet, die mit der Lagerplatte zusammenarbeitet. Günstig ist es aber ebenso möglich, die Rückseite des Bodens des Rotors oder Teile davon als Lagerfläche auszubilden, wie dies in der deutschen Patentanmeldung 198 59 104.7 gezeigt ist. Entsprechend vorteilhaft ist die Ausgestaltung eines Spinnrotors mit einer Lagerfläche aus Polyimid wie in den übrigen Unteransprüchen beschrieben.

In besonders vorteilhafter Weiterbildung der Erfindung arbeitet die Lagerplatte aus Polyimid mit einer Lagerfläche aus Carbid zusammen. Ebensogut kann die Lagerfläche aus einem anderen Werkstoff, beispielsweise Stahl bestehen, der mit einem Carbid beschichtet ist. Das Carbid ergibt mit dem Polyimid eine besonders günstige Werkstoffpaarung, was das Verschleißverhalten und die Lebensdauer betrifft. Ebenso vorteilhaft arbeitet die Lagerplatte des Axiallagers, wenn diese aus Carbid oder einer Carbidbeschichtung besteht, mit einer Lagerfläche aus Polyimid zusammen. Besonders günstig für die Ausgestaltung einer Offenend-Spinnvorrichtung ist die Kombination einer Lagerplatte am Axiallager aus Polyimid mit einem Spinnrotor, dessen Lagerfläche mit einem Carbid beschichtet ist.

Vorzugsweise ist das Carbid Siliziumkarbid bzw. eine Beschichtung mit Siliziumkarbid. In weiterer vorteilhafter Ausgestaltung ist die Oberfläche des Carbids oder der Carbidbeschichtung an der Lagerplatte oder Lagerfläche mit einer Rautiefe von weniger als 3 µm ausgebildet, besonders günstig mit einer Rautiefe von weniger oder gleich 1 µm.

Im folgenden wird die Erfindung anhand von zeichnerischen Darstellungen erläutert. Es zeigen:
- **Figur 1**: Eine erfindungsgemäße Offenend-Spinnvorrichtung im Schnitt;
- **Figur 2A**: einen Schnitt durch das Axiallager;
- **Figur 2B**: eine Draufsicht auf die Lagerplatte des Axiallagers;
- **Figur 3**: das freie Ende des Rotorschaftes;
- **Figur 4**: einen Rotorschaft mit einem Ansatz als Lagerfläche des Spinnrotors und
- **Figur 5**: eine alternative Ausführungsform des Axiallagers im Schnitt.

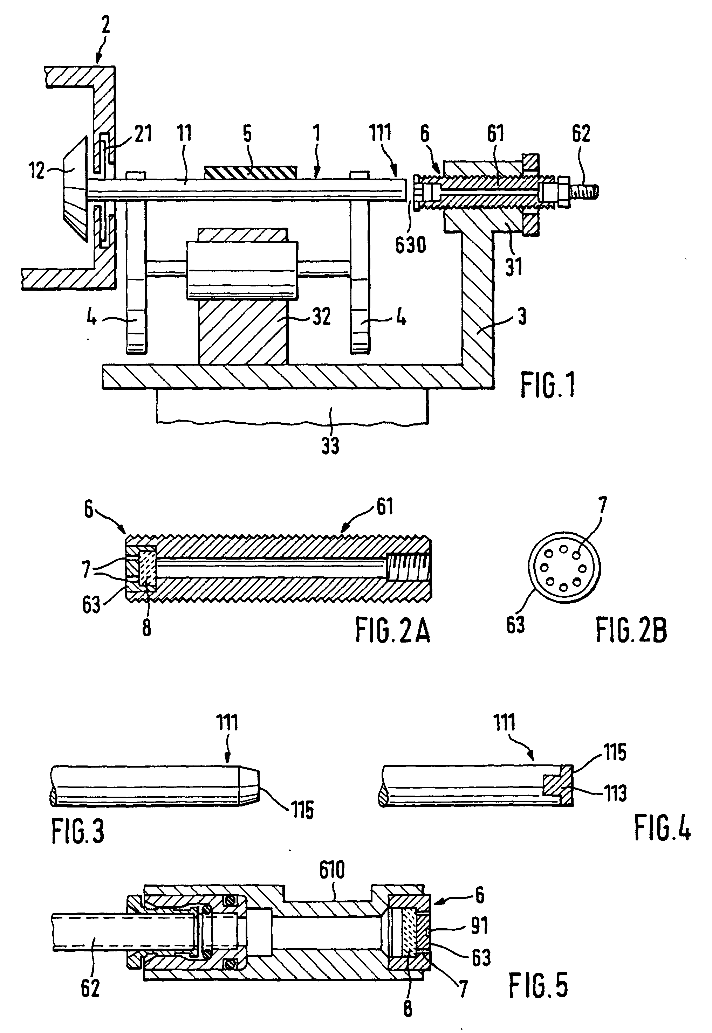

In Figur 1 ist eine erfindungsgemäß ausgestaltete Offenend-Spinnvorrichtung mit einem Spinnrotor gemäß der Erfindung im Schnitt gezeigt. Die wesentlichen Bestandteile der Offenend-Spinnvorrichtung sind der Spinnrotor 1 mit seinem Schaft 11 und dem Rotorteller 12, das Rotorgehäuse 2 mit der Rotorgehäuseabdichtung 21, der Lagerbock 3 mit einer Aufnahme 31 für das Axiallager 6 und einer Aufnahme 32 für die Lagerung der Stützscheiben 4, sowie die Stützscheiben 4 selbst, zur Aufnahme des Rotorschaftes 11. Ferner sind das Antriebsmittel 5, ein Tangentialriemen, und das Axiallager 6 zur axialen Abstützung des Rotorschaftes 11 dargestellt. Der Rotorschaft 11 reicht mit seinem den Rotorteller 12 tragenden Ende in das Rotorgehäuse 2 durch die Bohrung der Rotorgehäusedichtung 21 hindurch. Das Axiallager 6 ist in einer Stellschraube 61 angeordnet und liegt dem freien Ende 111 des Rotorschaftes 11 gegenüber. Eine alternative Ausgestaltung des Axiallagers 6 anstelle der Stellschraube 61 ist in Figur 5 gezeigt.

Die Aufnahme 31 für das Axiallager 6 besitzt eine Bohrung mit einem Gewinde, in das die Stellschraube axial einjustierbar eingeschraubt ist. Zur Fixierung dient eine Kontermutter. Am anderen Ende der Stellschraube 61 ist der Anschluß 62 für die Zuführung der Druckluft zum Axiallager 6 angeordnet.

Zwischen diesem und dem Schaftende 111 erstreckt sich der Lagerspalt 630. Auch von Spinnrotoren von gattungsgemäßen Offenend-Spinnvorrichtungen wird in bekannter Weise eine axiale Kraft aufgebracht, die sich über das freien Ende 111 des Rotorschaftes 11 abstützt. Die axiale Kraft auf den Rotor bzw. Rotorschaft wird bei der in Figur 1 gezeigten Offenend-Spinnvorrichtung durch in bekannter Weise schief gestellte Stützscheiben 4 aufgebracht. Ebenso gut ist es aber auch möglich, die axiale Kraftkomponente z.B. über einen schräg zum Rotorschaft verlaufenden Antriebsriemen oder auch eine schräg gestellte Andrück- oder Treibscheibe aufzubringen. Die Offenend-Spinnvorrichtung ist auf der Aufnahme 33, die Teil der dazugehörigen Spinnmaschine ist, befestigt.

Figur 2A zeigt eine Stellschraube 61 und eine darin angeordnete Lagerplatte 63 eines erfindungsgemäßen aerostatischen Axiallagers 6. Zum Austritt der Luft in den Lagerspalt 630 besitzt die Lagerplatte 63 mehrere Bohrungen 7. Eine Drosselvorrichtung 8, die aus einem Sinterwerkstoff besteht, ist den Bohrungen vorgeschaltet, wodurch das Lager eine hohe Steifigkeit erhält, da die kurzen Luftsäulen in den Bohrungen 7 kaum kompressibel sind.

Figur 2B zeigt die Lagerplatte 63 von Figur 2A in der Draufsicht. Die Bohrungen 7 sind auf einer Kreislinie im Abstand zum Mittelpunkt gleichmäßig verteilt angeordnet. Die Lagerplatte 63 besteht aus Polyimid. Zur Verbesserung der Eigenschaften des Polyimids kann dieses mit einem oder mehreren Zusatzstoffen versetzt sein, die geeignet sind, die Eigenschaften des Lagerwerkstoffes zu verbessern. So ist es beispielsweise vorteilhaft, das Polyimid mit Graphit zu versetzen oder auch, in Verbindung mit Graphit, mit Teflon (Polytetrafluorethylen).

Die Lagerplatte 63 von Figur 2B ist, wie aus Figur 2A ersichtlich, in eine Bohrung der Stellschraube 61 eingepreßt. Die dabei auftretenden mechanischen Belastungen auf die Lagerplatte 63 kann diese aufgrund ihrer günstigen Werkstoffeigenschaften problemlos aufnehmen. Auch das Einpressen der Drossel 8 in die Lagerplatte kann durch deren Festigkeit ermöglicht werden.

Figur 3 zeigt ein erfindungsgemäß ausgebildetes Schaftende 111, das mit der Lagerplatte des Axiallagers zusammenarbeitet. Das Schaftende 111 besitzt eine plangeschliffene Lagerfläche 115, die mit Polyimid beschichtet ist. Die Beschichtung besitzt dabei eine Dicke, so daß ihre günstigen Eigenschaften für ein aerostatisches Axiallager zum Tragen kommen können. Die derart ausgestaltete Lagerfläche arbeitet mit einer Lagerplatte eines entsprechenden Axiallagers zusammen, wobei die Lagerplatte in ihrer einfachsten Ausgestaltung eine Metallplatte sein kann, die mit einer oder mehreren Bohrungen 7, ähnlich Figur 2B für den Zutritt von Luft in den Lagerspalt 630 ausgebildet ist. Bei einer anderen Ausgestaltung des Axiallagers, bei der die Lagerplatte aus Polyimid besteht, ist das Schaftende 111, bzw. dessen plangeschliffene Lagerfläche 115 mit Siliziumkarbid beschichtet. Die Rautiefe beträgt dabei weniger als 3 µm, am besten nur 1 µm oder weniger. Eine derartige Kombination der Lagerwerkstoffe ergibt ein besonders verschleißfestes Axiallager für eine Offenend-Spinnvorrichtung und damit eine lange Lebensdauer.

Für das leichtere Austauschen des Spinnrotors besitzt das Schaftende 111 im Bereich der Fläche 115 einen etwas geringeren Durchmesser als der übrige Rotorschaft. Dadurch kann der Rotorschaft beim Einsetzen in das Rotorlager der Offenend-Spinnvorrichtung leichter in den Keilspalt der Stützscheiben 4 hineingeschoben werden.

Figur 4 zeigt das freie Ende 111 eines erfindungsgemäß ausgestalteten Rotorschaftes bei dem dieses einen Ansatz 113 trägt, der aus Polyimid besteht. Der Ansatz 113 ist über geeignete Verbindungsmittel, z.B. einen Klebstoff in das entsprechend vorbereitete Ende des Rotorschaftes eingefügt und befestigt. Die Lagerfläche 115 ist ebenso wie die aus einer Beschichtung bestehende Lagerfläche 115 von Figur 3 plan ausgebildet und mit einer geringen Rauhtiefe ausgestaltet. Dies gewährleistet zusammen mit dem Polyimid-Werkstoff, daß nur ein sehr geringer Verschleiß an der Lagerplatte mit der der Rotorschaft bzw. dessen Ansatz 113 zusammenarbeitet, auftritt.

Neben dem in Figur 4 gezeigten Ausführungsbeispiel eines Ansatzes 113 kann dieser auch ohne Formschluß mit dem Schaft verbunden sein. Der Ansatz 113 ist in einem solchen Fall mit einer ebenen Fläche, auf der ebenso gestalteten Fläche des Rotorschaftendes aufgebracht. Die Befestigung kann dabei ebenfalls mittels eines Klebstoffs erfolgen.

Figur 5 zeigt eine andere Ausführungsform einer Aufnahme für ein Axiallager 6. Bei dieser Ausführungsform des Axiallagers 6 enthält die Aufnahme 31 kein Gewinde, sondern es wird die in Figur 5 gezeigte Vorrichtung mittels einer nicht gezeigten Schraube am Maschinengestell über die Fläche 610 angeklemmt. Die Luftzufuhr für den Lagerspalt erfolgt, wie bei Figur 1 gezeigt, über den Anschluß 62. Die Lagerplatte 63 besitzt ebenfalls Bohrungen 7 für den Zutritt von Luft in den Lagerspalt. Unmittelbar vor den Bohrungen 7 ist eine Drossel 8 angeordnet, um die Steifigkeit des aerostatischen Axiallagers zu erhöhen. Die Lagerplatte 63 besitzt zur Aufnahme der Drossel 8 eine Bohrung, die die Drossel aufnimmt. Auf ihrer dem Rotorschaft zugewandten Seite besitzt die Lagerplatte 63 eine Verschleißanzeige 91, in Form einer kurzen Sacklochbohrung, die geeignet ist, den Verschleiß an der Lagerplatte 63 zu überwachen.

## Patentansprüche

1. Offenend-Spinnvorrichtung mit einem Spinnrotor (1), der über seinen Schaft (11) durch Stützscheiben (4) gelagert ist, auf den eine axial wirkende Kraft ausgeübt wird, und der sich über eine Lagerfläche (115) an einem aerostatischen Axiallager (6) axial abstützt, wobei die Lagerfläche (115) des Spinnrotors (1) mit der Lagerplatte (63) des Axiallagers zusammenwirkt, **dadurch gekennzeichnet, daß** die Lagerfläche (115) und/oder die Lagerplatte (63) aus einem Werkstoff aus Polyimid besteht.

2. Offenend-Spinnvorrichtung nach Anspruch 1, **dadurch gekennzeichnet, daß** der Werkstoff aus Polyimid besteht, das mit einem Zusatz versetzt ist.

3. Offenend-Spinnvorrichtung nach Anspruch 2, **dadurch gekennzeichnet, daß** der Werkstoff aus Polyimid besteht, das mit Graphit versetzt ist.

4. Offenend-Spinnvorrichtung einem oder mehreren der Ansprüche 2 bis 4, **dadurch gekennzeichnet, daß** der prozentuale Anteil des Graphits im Werkstoff größer als 40% ist.

5. Offenend-Spinnvorrichtung nach einem oder mehreren der Ansprüche 2 bis 4, **dadurch gekennzeichnet, daß** der Werkstoff aus Polyimid besteht, das mit Teflon (PTFE) versetzt ist.

6. Offenend-Spinnvorrichtung nach einem oder mehreren der Ansprüche 2 bis 5, **dadurch gekennzeichnet, daß** der Werkstoff aus Polyimid besteht, das mit MoS₂ (Molybdändisulfid) versetzt ist.

7. Offenend-Spinnvorrichtung nach einem oder mehreren der Ansprüche 1 bis 6, **dadurch gekennzeichnet, daß** die Lagerplatte (63) eine oder mehrere Bohrungen (7) für den Durchtritt von Luft besitzt.

8. Offenend-Spinnvorrichtung nach Anspruch 7, **dadurch gekennzeichnet, daß** die Bohrungen (7) auf einer Kreislinie angeordnet sind.

9. Offenend-Spinnvorrichtung nach Anspruch 7 oder 8, **dadurch gekennzeichnet, daß** vor der Bohrung (7), in Austrittsrichtung der Luft betrachtet, eine Drosselvorrichtung (8) zur Drosselung der Luftströmung angeordnet ist.

10. Offenend-Spinnvorrichtung nach Anspruch 9, **dadurch gekennzeichnet, daß** die Drosselvorrichtung (8) aus einem permeablen, durch Sintern hergestellten Werkstoff besteht.

11. Offenend-Spinnvorrichtung nach einem oder mehreren der Ansprüche 1 bis 10, **dadurch gekennzeichnet, daß** der Spinnrotor (1) über einen Rotorschaft (11) gelagert ist und dieser mit seinem dem Rotorteller (12) abgewandten Ende die Lagerfläche (115) des Spinnrotors (1) bildet.

12. Offenend-Spinnvorrichtung nach Anspruch 11, **dadurch gekennzeichnet, daß** das Ende des Rotorschaftes (11) einen Ansatz (113) aus Polyimid besitzt.

13. Offenend-Spinnvorrichtung nach einem oder mehreren der Ansprüche 1 bis 10, **dadurch gekennzeichnet, daß** der Spinnrotor (1) die Lagerfläche, (115) trägt.

14. Offenend-Spinnvorrichtung nach einem oder mehreren der Ansprüche 1 bis 13, **dadurch gekennzeichnet, daß** die Lagerfläche (115) aus Polyimid besteht und die Lagerplatte (63) aus einem Carbid besteht oder mit Carbid beschichtet ist.

15. Offenend-Spinnvorrichtung nach einem oder mehreren der Ansprüche 1 bis 13, **dadurch gekennzeichnet, daß** die Lagerplatte (63) aus Polyimid besteht und die Lagerfläche (115) aus einem Carbid besteht oder mit Carbid beschichtet ist.

16. Offenend-Spinnvorrichtung nach Anspruch 14 oder 15, **dadurch gekennzeichnet, daß** das Carbid Siliziumkarbid ist.

17. Offenend-Spinnvorrichtung nach einem oder mehreren der Ansprüche 14 bis 16, **dadurch gekennzeichnet, daß** die Oberfläche des Carbids eine Rauhtiefe R_{Z} von weniger als 3 µm hat, vorzugsweise von weniger oder gleich 1 µm hat.

18. Spinnrotor, insbesondere für eine Offenend-Spinnvorrichtung, nach einem oder mehreren der Ansprüche 1 bis 17, mit einem Schaft (11), über den er gelagert wird, und mit einer Lagerfläche (115), über die sich der Spinnrotor (1) axial abstützt, **dadurch gekennzeichnet, daß** das dem Rotorteller (12) gegenüberliegende Ende des Rotorschaftes (11) die Lagerfläche bildet und diese aus dem Werkstoff Polyimid besteht.

19. Spinnrotor nach Anspruch 18, **dadurch gekennzeichnet, daß** das dem Rotorteller (12) gegenüberliegende Ende des Rotorschaftes (11) einen Ansatz trägt, der eine Lagerfläche aus Polyimid besitzt.

20. Spinnrotor nach Anspruch 19, **dadurch gekennzeichnet, daß** der Ansatz aus Polyimid besteht.

21. Spinnrotor nach einem oder mehreren der Ansprüche 18 bis 20, **dadurch gekennzeichnet, daß** das Polyimid mit einem oder mehreren Zusätzen versetzt ist.

22. Spinnrotor nach Anspruch 21, **dadurch gekennzeichnet, daß** der Zusatz Graphit, PTFE, MoS₂ oder ein Faserstoff zur Verbesserung der mechanischen Stabilität ist.

23. Spinnrotor, für eine Offenend-Spinnvorrichtung, nach einem oder mehreren der Ansprüche 1 bis 17, mit einem Schaft (11), über den er gelagert wird, und mit einer Lagerfläche (115), über die sich der Spinnrotor (1) axial abstützt, **dadurch gekennzeichnet, daß** das dem Rotorteller (12) gegenüberliegende Ende des Rotorschaftes (11) die Lagerfläche (115) bildet und die Lagerfläche (115) mit Karbid beschichtet ist.

24. Spinnrotor nach Anspruch 23, **dadurch gekennzeichnet, daß** das Carbid Siliziumkarbid ist.

25. Spinnrotor nach einem oder mehreren der Ansprüche 18 bis 24, **dadurch gekennzeichnet, daß** die Oberfläche der Lagerfläche (115) eine Rauhtiefe R_{Z} von weniger als 3 µm hat.

26. Spinnrotor nach einem oder mehreren der Ansprüche 18 bis 25, **dadurch gekennzeichnet, daß** die Oberfläche der Lagerfläche (115) eine Rauhtiefe R_{Z} von weniger oder gleich 1 µm hat.

## Claims

1. Open-end spinning device with a spinning rotor (1), whose stem (11) is mounted by support plates (4), onto which an axial force is exerted and which is supported axially by a bearing face (115) on an aerostatic thrust bearing (6) such that the bearing face (115) of the spinning rotor (1) interacts with the bearing plate (63) of the thrust bearing, **characterized such that** the bearing face (115) and/or the bearing plate (63) is made from a polyimide material.

2. Open-end spinning device in accordance with Patent Claim 1, **characterized such that** the material is made from polyimide with an additive.

3. Open-end spinning device in accordance with Patent Claim 2, **characterized such that** the material is made from polyimide with added graphite.

4. Open-end spinning device in accordance with one or several of the Patent Claims 2 to 4, **characterized such that** the percentage share of graphite in the material is greater than 40 %.

5. Open-end spinning device in accordance with one or several of the Patent Claims 2 to 4, **characterized such that** the material is polyimide with added Teflon (PTFE).

6. Open-end spinning device in accordance with one or several of the Patent Claims 2 to 5, **characterized such that** the material is polyimide with added MoS₂ (molybdenum disulphide).

7. Open-end spinning device in accordance with one or several of the Patent Claims 1 to 6, **characterized such that** the bearing plate (63) features one or several holes (7) allowing air to pass through.

8. Open-end spinning device in accordance with Patent Claim 7, **characterized such that** the holes (7) are arranged in a circle.

9. Open-end spinning device in accordance with Patent Claim 7 or 8, **characterized such that** a throttling device (8) for restricting the air flow is arranged in front of the hole (7), viewed in the direction of air outlet.

10. Open-end spinning device in accordance with Patent Claim 9, **characterized such that** the throttling device (8) is made from a permeable material produced by sintering.

11. Open-end spinning device in accordance with one or several of the Patent Claims 1 to 10, **characterized such that** the spinning rotor (1) is mounted by means of a rotor stem (11) and together with its end facing away from the rotor plate (12) it forms the bearing face (115) of the spinning rotor (1).

12. Open-end spinning device in accordance with Patent Claim 11, **characterized such that** the end of the rotor stem (11) has a shoulder (113) made from polyimide .

13. Open-end spinning device in accordance with one or several of the Patent Claims 1 to 10, **characterized such that** the spinning rotor (1) bears the bearing face (115).

14. Open-end spinning device in accordance with one or several of the Patent Claims 1 to 13, **characterized such that** the bearing face (115) is made from polyimide and the bearing plate (63) is made from carbide or is coated with carbide.

15. Open-end spinning device in accordance with one or several of the Patent Claims 1 to 13, **characterized such that** the bearing plate (63) is made from polyimide and the bearing face (115) is made from carbide or is coated with carbide.

16. Open-end spinning device in accordance with patent Claim 14 or 15, **characterized such that** the carbide material is silicon carbide.

17. Open-end spinning device in accordance with one or several of the Patent Claims 14 to 16, **characterized such that** the surface of the carbide exhibits a surface roughness R_{z} of less than 3 µm, preferably less than or equal to 1 µm.

18. Spinning rotor, particularly for an open-end spinning device, in accordance with one or several of the Patent Claims 1 to 17, featuring a stem (11) via which it is mounted and with a bearing face (115) by means of which the spinning rotor (1) is supported axially, **characterized such that** the end of the rotor stem (11), located opposite the rotor plate (12), forms the bearing face and is made from polyimide material.

19. Spinning rotor in accordance with Patent Claim 18, **characterized such that** the end of the rotor stem (11) opposite the rotor plate (12) bears a shoulder that features a bearing face made of polyimide .

20. Spinning rotor in accordance with Patent Claim 19, **characterized such that** the shoulder is made from polyimide .

21. Spinning rotor in accordance with one or several of the Patent claims 18 to 20, **characterized such that** the polyimide is mixed with one or several additives.

22. Spinning rotor in accordance with Patent Claim 21, **characterized such that** the additive is graphite, PTFE, MoS₂ or a fibrous material to improve the mechanical stability.

23. Spinning rotor for an open-end spinning device in accordance with one or several of the Patent Claims 1 to 17, featuring a stem (11) via which it is mounted and with a bearing face (115) by means of which the spinning rotor (1) is supported axially, **characterized such that** the end of the rotor stem (11), located opposite the rotor plate (12), forms the bearing face (115) and the bearing face (115) is coated with carbide.

24. Spinning rotor in accordance with Patent Claim 23, **characterized such that** the carbide material is silicon carbide.

25. Spinning rotor in accordance with one or several of the Patent Claims 18 to 24, **characterized such that** the surface of the bearing face (115) exhibits a surface roughness R_{z} of less than 3 µm.

26. Spinning rotor in accordance with one or several of the Patent Claims 18 to 25, **characterized such that** the surface of the bearing face (115) exhibits a surface roughness R_{z} of less than or equal to 1 µm.

## Revendications

1. Dispositif de filature à fibres libérées avec un rotor de filature (1) qui, par le biais de sa tige (11), est monté sur des meules d'appui (4), sur lequel s'exerce une force à effet axial et qui s'appuie par le biais d'une surface d'appui (115) sur un palier aérostatique à charge axiale (6), sachant que la surface d'appui (115) du rotor de filature (1) et la plaque d'assise (63) du palier à charge axiale ont des effets concourants, **caractérisé en ce que** la surface d'appui (115) et/ou la plaque d'assise (63) est/sont composée(s) d'un matériau de polyimide.

2. Dispositif de filature à fibres libérées selon la revendication 1, **caractérisé en ce que** le matériau est un polyimide contenant un additif.

3. Dispositif de filature à fibres libérées selon la revendication 2, **caractérisé en ce que** le matériau est du polyimide comportant un additif de graphite.

4. Dispositif de filature à fibres libérées selon l'une quelconque ou plusieurs des revendications 2 à 4, **caractérisé en ce que** la part en pourcents du graphite dans le matériau est supérieure à 40%.

5. Dispositif de filature à fibres libérées selon l'une quelconque ou plusieurs des revendications 2 à 4, **caractérisé en ce que** le matériau est du polyimide comportant un additif de Téflon (PTFE).

6. Dispositif de filature à fibres libérées selon l'une quelconque ou plusieurs des revendications 2 à 5, **caractérisé en ce que** le matériau est du polyimide comportant un additif de MoS₂ (bisulfure de molybdène).

7. Dispositif de filature à fibres libérées selon l'une quelconque ou plusieurs des revendications 1 à 6, **caractérisé en ce que** la plaque d'assise (63) comporte un ou plusieurs orifices (7) pour le passage de l'air.

8. Dispositif de filature à fibres libérées selon la revendication 7, **caractérisé en ce que** les orifices (7) sont disposés sur une ligne circulaire.

9. Dispositif de filature à fibres libérées selon la revendication 7 ou 8, **caractérisé en ce qu'**un dispositif d'étranglement (8) est disposé devant les orifices (7), vus dans le sens de sortie de l'air, pour permettre l'étranglement de l'écoulement d'air.

10. Dispositif de filature à fibres libérées selon la revendication 9, **caractérisé en ce que** le dispositif d'étranglement (8) est composé d'un matériau perméable réalisé par sintérisation.

11. Dispositif de filature à fibres libérées selon l'une quelconque ou plusieurs des revendications 1 à 10, **caractérisé en ce que** le rotor de filature (1) est monté sur une tige de rotor (11) et que celui-ci, par son extrémité éloignée de l'assiette de rotor (12), constitue la surface d'appui (115) du rotor de filature.

12. Dispositif de filature à fibres libérées selon la revendication 11, **caractérisé en ce que** l'extrémité de la tige de rotor (11) comporte une embase (113) réalisée en polyimide.

13. Dispositif de filature à fibres libérées selon l'une quelconque ou plusieurs des revendications 1 à 10, **caractérisé en ce que** le rotor de filature (1) porte la surface d'appui (115).

14. Dispositif de filature à fibres libérées selon l'une quelconque ou plusieurs des revendications 1 à 13, **caractérisé en ce que** la surface d'appui (115) est composée de polyimide et que la plaque d'assise (63) est composée de carbure ou qu'elle comporte un revêtement de carbure.

15. Dispositif de filature à fibres libérées selon l'une quelconque ou plusieurs des revendications 1 à 13, **caractérisé en ce que** la plaque d'assise (63) est composée de polyimide et que la surface d'appui (115) est composée de carbure ou qu'elle comporte un revêtement de carbure.

16. Dispositif de filature à fibres libérées selon la revendication 14 ou 15 **caractérisé en ce que** le carbure est du carbure de silicium.

17. Dispositif de filature à fibres libérées selon l'une quelconque ou plusieurs des revendications 14 à 16, **caractérisé en ce que** la surface du carbure présente une profondeur de rugosité R_{z} inférieure à 3 µm, de préférence inférieure ou égale à 1 µm.

18. Rotor de filature, notamment pour un dispositif de filature à fibres libérées, selon l'une quelconque ou plusieurs des revendications 1 à 17, doté d'une tige (11) par laquelle il est monté, et avec une surface d'appui (115) sur laquelle s'appuie le rotor de filature (1) dans le sens axial, **caractérisé en ce que** l'extrémité de la tige de rotor (11) opposée à l'assiette de rotor (12) constitue la surface d'appui (115) et que cette dernière est composée d'un matériau de polyimide.

19. Rotor de filature selon la revendication 18, **caractérisé en ce que** l'extrémité de la tige de rotor (11) opposée à l'assiette de rotor comporte une embase, qui comporte une surface d'appui en polyimide.

20. Rotor de filature selon la revendication 19, **caractérisé en ce que** l'embase est composée de polyimide.

21. Rotor de filature selon l'une quelconque ou plusieurs des revendications 18 à 20, **caractérisé en ce que** le polyimide contient un ou plusieurs additifs.

22. Rotor de filature selon la revendication 21, **caractérisé en ce que** l'additif est du graphite, du PTFE, du MoS₂ ou un matériau fibreux destiné à l'amélioration de la stabilité mécanique.

23. Rotor de filature pour un dispositif de filature à fibres libérées, selon l'une quelconque ou plusieurs des revendications 1 à 17, doté d'une tige (11) par laquelle il est monté, et avec une surface d'appui (115) sur laquelle s'appuie le rotor de filature (1) dans le sens axial, **caractérisé en ce que** l'extrémité de la tige de rotor (11) opposée à l'assiette de rotor (12) constitue la surface d'appui (115) et que la surface d'appui (115) comporte un revêtement de carbure.

24. Rotor de filature selon la revendication 23, **caractérisé en ce que** le carbure est du carbure de silicium.

25. Rotor de filature selon l'une quelconque ou plusieurs des revendications 18 à 24, **caractérisé en ce que** la surface de la surface d'appui (115) présente une profondeur de rugosité R_{z} inférieure à 3 µm.

26. Rotor de filature selon l'une quelconque ou plusieurs des revendications 18 à 25, **caractérisé en ce que** la surface de la surface d'appui (115) présente une profondeur de rugosité R_{z} inférieure ou égale à 1 µm.
